# EUROPEAN PATENT APPLICATION

(11) **EP 4 152 631 A1**
(43) Date of publication of application: **22.03.2023**
(21) Application number: 21803703.4
(22) Date of filing: 11.05.2021
(51) Int. Cl.: H04B 7/0413

(54) **INFORMATION TRANSMISSION METHOD AND NODE DEVICE**

(30) Priority: 15.05.2020 CN 202010415262
(71) Applicant: Vivo Mobile Communication Co., Ltd., Dongguan, Guangdong 523863 (CN)
(72) Inventor: JIANG, Dajie, Dongguan, Guangdong 523863 (CN); YANG, Kun, Dongguan, Guangdong 523863 (CN); QIN, Fei, Dongguan, Guangdong 523863 (CN)
(74) Representative: Conti, Marco
(86) International application number: PCT/CN2021/093014
(87) International publication number: WO 2021/228076

(57) **Abstract**

The present invention provides an information transmission method and a node device. The method includes: coordinating target information with a second node device; and determining, based on the target information, working information of a third node device; where the target information includes at least one of first information, second information, feedback information for the first information, and feedback information for the second information; the working information includes identification information of the third node device; and the working information further includes at least one of the following: on/off information of switch elements of reflecting or refracting units in the third node device; a working mode of the third node device; phase related information; amplitude related information; polarization related information; and frequency related information.

## Description

### CROSS-REFERENCE TO RELATED APPLICATIONS

This application claims priority to Chinese Patent Application No. 202010415262.X, filed in China on May 15, 2020, which is incorporated herein by reference in its entirety.

### TECHNICAL FIELD

The present invention relates to the field of communications technologies, and in particular, to an information transmission method and a node device.

### BACKGROUND

In the related art, intelligent surfaces operate on relatively large bandwidth, for example, from several GHz to tens of GHz, while bandwidth for each generation of system (for example, the fourth generation (4^{th} Generation, 4G) and the fifth generation (5^{th} Generation, 5G)) of operators is relatively small, from tens of MHz to hundreds of MHz. After signals emitted by base stations of different operators are incident on an intelligent surface, a control circuit of the intelligent surface may be used to control direction of reflected signals or direction of refracted signals, so as to achieve coverage enhancement, blind compensation, or other purposes. Because the operating bandwidth of the intelligent surface is significantly larger than the system bandwidth of a single operator, or because the operating bandwidth of the intelligent surface spans the bandwidth of multiple operators, the following conflict events may occur: For example, a base station of operator A expects the intelligent surface to make signals of the base station cover direction 1, and a base station of operator B expects the intelligent surface to make signals of the base station cover direction 2. However, the intelligent surface can control main reflected waves to be in only one direction at one moment.

### SUMMARY

Embodiments of the present invention provide an information transmission method and a node device, to resolve a problem that an intelligent surface cannot simultaneously execute different working commands for the intelligent surface from two base stations.

To resolve the foregoing technical problem, the following technical solutions are used in the present invention.

According to a first aspect, an embodiment of the present invention provides an information transmission method, applied to a first node device and including:
coordinating target information with a second node device; and
determining, based on the target information, working information of a third node device; where
the target information includes at least one of first information, second information, feedback information for the first information, and feedback information for the second information;
the first information is working information of the third node device expected by the first node device;
the second information is working information of the third node device expected by the second node device;
the determined working information of the third node device includes identification information of the third node device; and
the determined working information of the third node device further includes at least one of the following:
   on/off information of switch elements of reflecting or refracting units in the third node device;
   a working mode of the third node device;
   phase related information;
   amplitude related information;
   polarization related information; and
   frequency related information.

According to a second aspect, an embodiment of the present invention provides an information transmission method, applied to a third node device and including:
obtaining working information of the third node device sent by a first node device and/or a second node device, where the working information is determined through coordination between the first node device and the second node device; and
performing a target operation based on the working information of the third node device; where
the working information includes identification information of the third node device; and
the working information further includes at least one of the following:
   on/off information of switch elements of reflecting or refracting units in the third node device;
   a working mode of the third node device;
   phase related information;
   amplitude related information;
   polarization related information; and
   frequency related information.

According to a third aspect, an embodiment of the present invention provides a node device, where the node device is a first node device and includes:
a coordination module, configured to coordinate target information with a second node device; and
a determination module, configured to determine, based on the target information, working information of a third node device; where
the target information includes at least one of first information, second information, feedback information for the first information, and feedback information for the second information;
the first information is working information of the third node device expected by the first node device;
the second information is working information of the third node device expected by the second node device;
the determined working information of the third node device includes identification information of the third node device; and
the determined working information of the third node device further includes at least one of the following:
   on/off information of switch elements of reflecting or refracting units in the third node device;
   a working mode of the third node device;
   phase related information;
   amplitude related information;
   polarization related information; and
   frequency related information.

According to a fourth aspect, an embodiment of the present invention further provides a node device, including a memory, a processor, and a program stored in the memory and capable of running on the processor. When the program is executed by the processor, the steps of the foregoing information transmission method applied to the first node device are implemented.

According to a fifth aspect, an embodiment of the present invention provides a node device, where the node device is a third node device and includes:
an obtaining module, configured to obtain working information of the third node device sent by a first node device and/or a second node device, where the working information is determined through coordination between the first node device and the second node device; and
an execution module, configured to perform a target operation based on the working information of the third node device; where
the working information includes identification information of the third node device; and
the working information further includes at least one of the following:
   on/off information of switch elements of reflecting or refracting units in the third node device;
   a working mode of the third node device;
   phase related information;
   amplitude related information;
   polarization related information; and
   frequency related information.

According to a sixth aspect, an embodiment of the present invention further provides a node device, including a memory, a processor, and a program stored in the memory and capable of running on the processor. When the program is executed by the processor, the steps of the foregoing information transmission method applied to the third node device are implemented.

According to a seventh aspect, an embodiment of the present invention further provides a readable storage medium, where the readable storage medium stores a program, and when the program is executed by a processor, the steps of the foregoing information transmission method applied to the first node device or the steps of the foregoing information transmission method applied to the third node device are implemented.

According to an eighth aspect, an embodiment of the present invention provides a chip, where the chip includes a processor and a communications interface, the communications interface is coupled to the processor, the processor is configured to run a program or instructions to implement the steps of the foregoing information transmission method applied to the first node device or the steps of the foregoing information transmission method applied to the third node device.

Beneficial effects of the present invention are as follows:
In the foregoing solutions, after coordinating the target information, the first node device and the second node device determine the working information of the third node device, so that the third node device works according to uniform working information, which resolves the problem that the intelligent surface cannot simultaneously execute different working commands for the intelligent surface from two nodes.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a first schematic flowchart of an information transmission method according to an embodiment of the present invention;
FIG. 2 is a first schematic diagram of interactions between node devices according to an embodiment of the present invention;
FIG. 3 is a second schematic diagram of interactions between node devices according to an embodiment of the present invention;
FIG. 4 is a third schematic diagram of interactions between node devices according to an embodiment of the present invention;
FIG. 5 is a fourth schematic diagram of interactions between node devices according to an embodiment of the present invention;
FIG. 6 is a fifth schematic diagram of interactions between node devices according to an embodiment of the present invention;
FIG. 7 is a sixth schematic diagram of interactions between node devices according to an embodiment of the present invention;
FIG. 8 is a seventh schematic diagram of interactions between node devices according to an embodiment of the present invention;
FIG. 9 is an eighth schematic diagram of interactions between node devices according to an embodiment of the present invention;
FIG. 10 is a second schematic flowchart of an information transmission method according to an embodiment of the present invention;
FIG. 11 is a first schematic modular diagram of a node device according to an embodiment of the present invention;
FIG. 12 is a structural block diagram of a node device according to an embodiment of the present invention; and
FIG. 13 is a second schematic modular diagram of a node device according to an embodiment of the present invention.

### DESCRIPTION OF EMBODIMENTS

The following describes example embodiments of the present invention in more detail with reference to the accompanying drawings. Although the accompanying drawings show example embodiments of the present invention, it should be understood that the present invention may be implemented in various forms and should not be limited by the embodiments described herein. Instead, these embodiments are provided so that the present invention will be better understood, and the scope of the present invention can be fully conveyed to those skilled in the art.

The terms "first", "second", and the like in this specification and claims of this application are used to distinguish between similar objects instead of describing a specific order or sequence. It should be understood that the data used in this way is interchangeable in appropriate circumstances, so that the embodiments of this application described herein can be implemented in other orders than the order illustrated or described herein. In addition, the terms "include", "have", and any other variants thereof are intended to cover a non-exclusive inclusion. For example, a process, method, system, product, or device that includes a list of steps or units is not necessarily limited to those steps or units that are expressly listed, but may include other steps or units that are not expressly listed or are inherent to such process, method, product, or device. "And/or" in the specification and claims represents at least one of connected objects.

Examples provided in the following description are not intended to limit the scope, applicability, or configuration described in the claims. Functions and arrangements of discussed elements may be changed without departing from the spirit and scope of this disclosure. Various examples may be omitted or replaced properly, or various procedures or components may be added. For example, the described method may be performed in an order different from the described order, and steps may be added, omitted, or combined. In addition, features described with reference to some examples may be combined in other examples.

The following description is made in order to make persons skilled in the art better understand the embodiments of the present invention.

Intelligent surface is an emerging technology and is involved with many related terms as follows that all refer to similar technologies or entities. These terms include:
large intelligent surface (Large Intelligent Surface, LIS), smart reflect array (Smart Reflect Array, SRA), reconfigurable reflect array (Reconfigurable Reflect Array, RRA), and intelligent reflecting surface (Intelligent Reflecting Surface, IRS).

IRS is composed of a large quantity of low-cost passive reflecting elements. IRS is an electromagnetic matamaterial (Electromagnetic Metamaterial) or a metasurface (Metasurface). Each reflecting element can independently induce changes in amplitude, phase and/or polarization of an incident signal, that is, reconfiguring a wireless propagation environment by controlling reflections. IRS does not use a transmitting radio frequency (Radio Frequency, RF) chain, and therefore has characteristics of low cost and low energy consumption.

Compared with active relay communication in the prior art, IRS does not use an active transmitting module, but only reflects a received signal. Active relay communication typically operates in half-duplex mode, which is less spectrally efficient than IRS operating in full-duplex mode. Compared with backscatter communication (for example, radio frequency identification (Radio Frequency Identification, RFID)) in the prior art, IRS, as a passive reflecting device, does not transmit its own information, but is only used to facilitate existing communication links, and compared with a massive multiple input multiple output (Multi Input Multi Output, MIMO) technology in the prior art, IRS has a very different operating principle. IRS is a passive array, while the large-scale MIMO is an active array. IRS is generally used as a reflect array, while the large-scale MIMO is generally used as a transmission array. Compared with massive MIMO technologies, IRS has advantages of low hardware cost and low transmission loss, and is more suitable for microwave and millimeter wave (mmWave) frequency bands.

The types of IRS reflecting units are as follows:
A. Tunable resonator: A variable capacitor is integrated into a resonator to produce a phase shift by changing frequency of a frequency-agile patch resonator;
B. Guided-wave control method: In this case, an arriving space wave is coupled to a guided wave by an antenna, and then the guided wave is phase-shifted and re-transmitted, forming an antenna phase shifter; and
C. Rotation technology for circularly polarized waves: design by using the law of reflection of electromagnetic waves.

Reflect arrays/intelligent surfaces are classified into two categories from a perspective of whether reflect arrays/intelligent surfaces can be dynamically controlled:
(1) Static reflect array/intelligent surface: Structure and functions of a reflect array may be fixed. For an incident wave at an angle, a metasurface unit causes fixed changes in amplitude, phase, polarization, and other characteristics of the incident wave, to obtain corresponding reflected waves; and
(2) Dynamic reflect array/intelligent surface: Structure and functions of a reflect array may be controlled. For an incident wave at an angle, amplitude, phase, polarization, and other characteristics of the incident wave may be changed differently through programmable control, to obtain corresponding reflected waves. To implement programmable control of a reflecting metasurface, switch elements (for example, diodes and radio frequency micro-electromechanical system (Radio Frequency Micro-Electromechanical Systems, RF-MEMS) switches) must be introduced into the reflecting unit. PIN diode is currently a common choice for controlling a reconfigurable metasurface. PIN diode has a wide range of radio frequency impedance and low distortion, and is widely used in microwave radio frequency fields. The switch elements in a reflecting unit enable the reflecting unit to have a plurality of different states, and a switchover between the different states may be implemented by controlling on/off of the switch elements. When the switch elements switch between on and off, a corresponding reflecting unit changes greatly in structure and performance, which means that the reflecting unit in a different state has a different control mode for the amplitude, phase, polarization, and other characteristics of the incident wave.

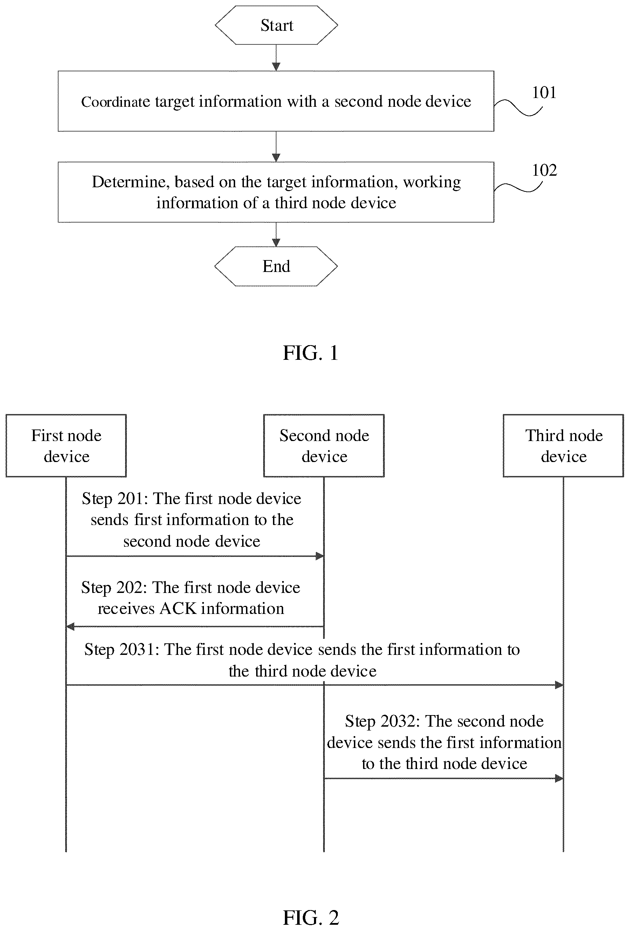

As shown in FIG. 1, an embodiment of the present invention provides an information transmission method, applied to a first node device, where the first node device may specifically be a base station, and the method includes the following steps.

Step 101: Coordinate target information with a second node device.

The second node device may be a node device belonging to a same operator as the first node device, or the second node device may alternatively be a node device belonging to a different operator than the first node device. The second node device is specifically a base station.

Optionally, the second node device has a same site address and a same antenna direction as the first node device; or
the second node device has a different site address from the first node device; or
the second node device has a different antenna direction from the first node device.

The first node device and the second node device coordinate target information through an interface between 5G base stations (gNB), an interface between long term evolution (LTE) base stations (eNB), an interface between gNB and eNB, or other interfaces.

Step 102: Determine, based on the target information, working information of a third node device.

Here, the third node device is a node device associated with the first node device and the second node device, and the third node device is specifically an intelligent surface.

The target information includes at least one of first information, second information, feedback information for the first information, and feedback information for the second information.

The first information is working information of the third node device expected by the first node device.

The second information is working information of the third node device expected by the second node device.

The feedback information includes positive acknowledgment (Acknowledgement, ACK) information or negative acknowledgment (Negative Acknowledgement, NACK) information.

The determined working information of the third node device includes identification information of the third node device.

The determined working information of the third node device further includes at least one of the following:
on/off information of switch elements of reflecting or refracting units in the third node device;
a working mode of the third node device;
phase related information;
amplitude related information;
polarization related information; and
frequency related information.

In an embodiment of the present invention, the identification information of the third node device may be an ID, an index (index), or the like of the third node device, where the third node device may be a LIS, SRA, RRA, or IRS. The third node device associated with the target information is determined through the identification information.

The on/off information of switch elements of reflecting or refracting units in the third node device may be a pattern of the switch elements. The switch elements enable the reflecting or refracting units to have a plurality of different states, and a switchover between the different states is implemented by controlling on/off of the switch elements. Different states correspond to different directions, phases, amplitudes, and/or polarizations of the reflected waves or refracted waves. For example, if 1 stands for an on state of the switch element and 0 stands for an off state of the switch element, a pattern of switch elements of a 100 × 100 emitting unit is a 100 × 100 matrix of bits 0 and 1.

Preferably, a finite quantity of patterns of switch elements of emitting units or refracting units of an intelligent surface can be specified, as shown in Table 1, where each pattern is a 100 × 100 matrix of bits 0 and 1. In this way, amount of information exchanged can be reduced. A shape or direction of reflected or refracted waves of the intelligent surface corresponding to each pattern may be different.

**Table 1**

| Pattern number of switch element | 1 | 2 | 3 | 4 |
|---|---|---|---|---|
| Bit representation | 00 | 01 | 10 | 11 |

In an embodiment of the present invention, as shown in Table 2, a finite quantity of working modes of the third node device can be specified to reduce amount of information exchanged. A shape or direction of reflected or refracted waves corresponding to each pattern may be different. The working information of the third node device includes at least one of the following:
covering one direction at one moment; and
covering two directions at one moment.

The covering one direction at one moment may refer to shape a main direction at one moment. The covering two directions at one moment may refer to shape two main directions at one moment.

Specifically, the covering two directions at one moment refers to shape two directions by the third node device at one moment, or means that one part of the third node device works in a mode of direction 1 and another part of the third node device works in a mode of direction 2 at the same time.

**Table 2**

| Working mode of third node device | 1 | 2 | 3 | 4 |
|---|---|---|---|---|
| Bit representation | 00 | 01 | 10 | 11 |

The phase related information may be phase information of each reflecting unit or refracting unit in the third node device.

The amplitude related information may be amplitude information of each reflecting unit or refracting unit in the third node device.

The polarization related information may be polarization information of each reflecting unit or refracting unit in the third node device.

The frequency related information may be information about a frequency at which the third node device works. For example, the third node device simultaneously supports two frequency bands, and the frequency related information indicates information about one of the frequency bands.

In the information transmission method in this embodiment of the present invention, after coordinating the target information, the first node device and the second node device determine the working information of the third node device, so that the third node device works according to uniform working information, which resolves the problem that the intelligent surface cannot simultaneously execute different working commands for the intelligent surface from two nodes.

Further, after the determining working information of a third node device, the method further includes:
sending the determined working information of the third node device to the third node device.

Further, the working information is periodic working information or the working information is aperiodic working information.

Optionally, when the working information is aperiodic working information, the working information further includes at least one of the following:
time information corresponding to the identification information;
time information corresponding to the on/off information;
time information corresponding to the phase related information;
time information corresponding to the amplitude related information; and
time information corresponding to the polarization related information.

The time information includes at least one of a start time, an end time, and a duration, and a time granularity of the time information may be slot (slot) or millisecond (ms).

Optionally, when the working information is periodic working information, the working information further includes N groups of bits; N is a quantity of time units included within one cycle of the working information, and the N groups of bits are in one-to-one correspondence with the N time units; where each group of bits is used to indicate at least one of the following information in a corresponding time unit:
a working mode;
on/off information of switch elements;
phase related information;
amplitude related information; and
polarization related information; and
N is an integer greater than or equal to 1, and a quantity of bits included in each group of bits is determined based on a quantity of pieces of the on/off information.

A description is made by taking the foregoing working mode as an example. It is assumed that the working mode of the third node device includes two working modes: working mode 1 represented by 0, and working mode 2 represented by 1. The working information is in form of a bitmap (Bitmap). For example, if the first information is 11011, with a position of each bit representing a moment, 11011 represents that in the first, second, fourth, and fifth time units of 5 time units, the third node device works in working mode 1, and in the third time unit, the third node device works in working mode 2.

Further, the working mode includes a first working mode on at least one downlink time resource and a second working mode on an uplink time resource corresponding to the at least one downlink time resource; where
the second working mode is one of the first working mode.

In a specific embodiment of the present invention, the time resource may be a slot (slot), a subframe, an ms, or the like. For example, taking a frequency band FR2 and a time division duplex (Time Division Duplex, TDD) system as an example, at least one of the foregoing working modes can be as shown in Table 3:

**Table 3**

| Slot | DL | DL | DL | DL | UL | DL | DL | DL | DL | UL |
|---|---|---|---|---|---|---|---|---|---|---|
| Working mode | 0 | 0 | 1 | 2 | 1 | 0 | 0 | 1 | 2 | 2 |
| Bit representation | 00 | 00 | 01 | 10 | 01 | 00 | 00 | 01 | 10 | 10 |

With Table 3, working modes in downlink slots and uplink slots in one cycle can be matched correspondingly. For example, in a cycle, if there are working modes 1 and 2 in downlink slots, there are also working modes 1 and 2 in the uplink slots.

Further, in a first optional implementation, the coordinating target information with a second node device includes:
sending the first information to the second node device; and
receiving third information sent by the second node device, where the third information includes at least one of the second information and the feedback information for the first information.

Further, the determining, based on the target information, working information of a third node device includes:
in a case that the third information includes the feedback information for the first information and that the feedback information for the first information is ACK information, determining that the working information of the third node device is the first information.

In this embodiment of the present invention, the ACK information indicates that the first node device and the second node device successfully coordinate consistent working information.

In a case that the third information includes only the feedback information for the first information and that the feedback information for the first information is NACK information,
after the receiving third information sent by the second node device, the method further includes:
sending fourth information to the second node device; and
receiving feedback information for the fourth information sent by the second node device; where
the fourth information is working information of the third node device expected by the first node device, and the fourth information is different from the first information.

Further, the determining, based on the target information, working information of a third node device includes:
in a case that the feedback information for the fourth information is ACK information, determining that the working information of the third node device is the fourth information.

In a case that the feedback information for the fourth information is a NACK, the first node device and the second node device continues to coordinate (exchange information) until the first node device and the second node device reach an agreement on consistent working information.

Further, in a case that the third information includes the second information and the feedback information for the first information and that the feedback information for the first information is NACK information, or in a case that the third information includes only the second information,
after the receiving third information sent by the second node device, the method further includes:
sending the feedback information for the second information to the second node device.

Further, the determining, based on the target information, working information of a third node device includes:
in a case that the feedback information for the second information is an ACK, determining that the working information of the third node device is the second information.

Here, the feedback information for the second information being an ACK indicates that the first node device agrees to determine the second information as the working information of the third node device, that is, the first node device and the second node device reach an agreement on that the second information is the working information of the third node device.

In a case that the feedback information for the second information is a NACK, the first node device and the second node device continues to coordinate (exchange information) until the first node device and the second node device reach an agreement on consistent working information.

Further, in a second optional implementation, the coordinating target information with a second node device includes:
receiving the second information sent by the second node device; and
sending fifth information to the second node device, the fifth information including at least one of fourth information and the feedback information for the second information; where
the fourth information is working information of the third node device expected by the first node device, and the fourth information is different from the first information.

Here, in a case that the feedback information for the second information is an ACK, it is determined that the working information of the third node device is the second information.

Further, in a case that the fifth information includes only the feedback information for the second information and that the feedback information for the second information is a NACK, or in a case that the fifth information includes only the fourth information, or in a case that the fifth information includes the fourth information and the feedback information for the second information and that the feedback information for the second information is NACK information,
after the sending the fifth information to the second node device, the method further includes:
receiving sixth information sent by the second node device, the sixth information including at least one of seventh information and feedback information for the fourth information; where
the seventh information is working information of the third node device expected by the second node device, and the seventh information is different from the second information.

In this embodiment of the present invention, the NACK information indicates that the first node device and the second node device do not reach an agreement on consistent working information. The feedback information for the second information being NACK indicates that the first node device does not agree to determine the second information as the working information of the third node device, and the first node device and the second node device need to continue coordination. Then the second node device sends the sixth information to the first node device.

In a case that the sixth information includes the feedback information for the fourth information and that the feedback information for the fourth information is an ACK, the second node device agrees to determine the fourth information as the working information of the third node device.

In a case that the sixth information includes the feedback information for the fourth information and that the feedback information for the fourth information is a NACK, the second node device does not agree to determine the fourth information as the working information of the third node device, and the first node device and the second node device need to continue coordination.

The coordination manners in the foregoing implementation are described in detail with reference to the accompanying drawings.

Interaction manner 1: As shown in FIG. 2, an information transmission method according to an embodiment of the present invention includes:
Step 201: The first node device sends first information to the second node device;
Step 202: The first node device receives ACK information; and
Step 2031: The first node device sends the first information to the third node device; or
Step 2032: The second node device sends the first information to the third node device.

Certainly, in this embodiment of the present invention, the first information may alternatively be sent by both the first node device and the second node device to the third node device.

Here, the first node device and the second node device reach an agreement on that the first information is the working information of the third node device.

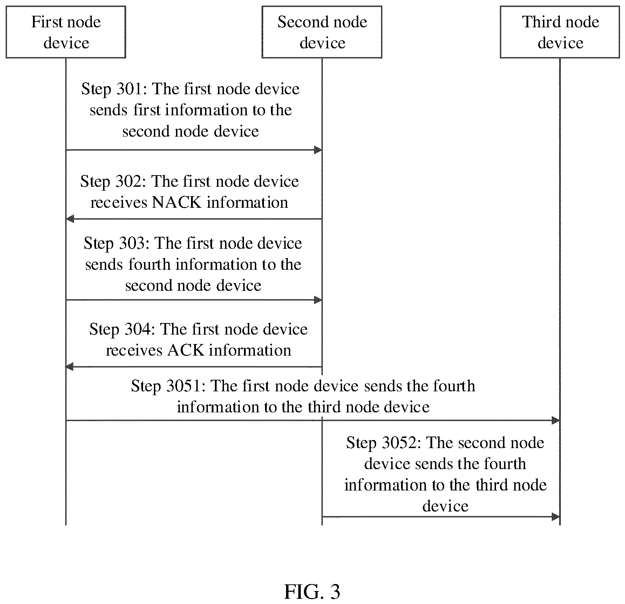

Interaction manner 2: As shown in FIG. 3, an information transmission method according to an embodiment of the present invention includes:
Step 301: The first node device sends first information to the second node device;
Step 302: The first node device receives NACK information;
Step 303: The first node device sends fourth information to the second node device;
Step 304: The first node device receives ACK information; and
Step 3051: The first node device sends the fourth information to the third node device; or
Step 3052: The second node device sends the fourth information to the third node device.

Here, the first node device and the second node device reach an agreement on that the fourth information is the working information of the third node device, and the first node device and/or the second node device sends the fourth information to the third node device.

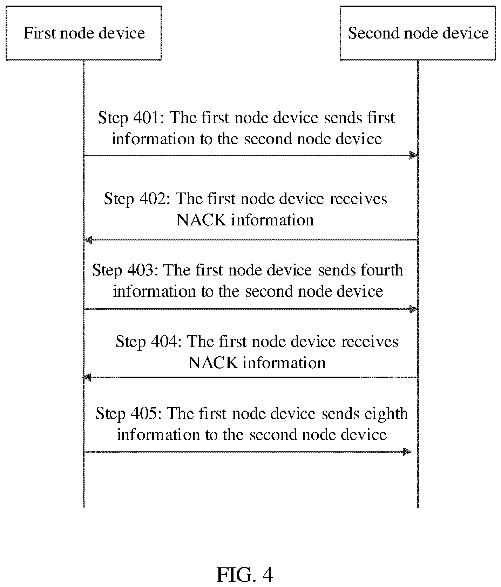

Interaction manner 3: As shown in FIG. 4, an information transmission method according to an embodiment of the present invention includes:
Step 401: The first node device sends first information to the second node device;
Step 402: The first node device receives NACK information;
Step 403: The first node device sends fourth information to the second node device;
Step 404: The first node device receives NACK information; and
Step 405: The first node device sends eighth information to the second node device.

Here, the eighth information is working information of the third node device expected by the first node device, and the eighth information is different from the first information and the fourth information.

After the eighth information is sent to the second node device, the working information of the third node device is to be determined according to feedback information for the eighth information, that is, the first node device and the second node device continue to coordinate until the first node device and the second node device reach an agreement on consistent working information, and the agreed working information of the third node device is sent to the third node device.

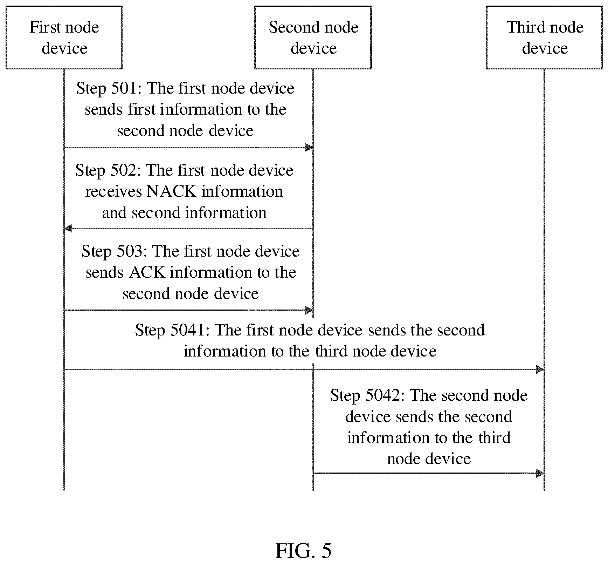

Interaction manner 4: As shown in FIG. 5, an information transmission method according to an embodiment of the present invention includes:
Step 501: The first node device sends first information to the second node device;
Step 502: The first node device receives NACK information and second information;
Step 503: The first node device sends ACK information to the second node device; and
Step 5041: The first node device sends the second information to the third node device; or
Step 5042: The second node device sends the second information to the third node device.

Certainly, in this embodiment of the present invention, the second information may alternatively be sent by both the first node device and the second node device to the third node device.

Here, the first node device and the second node device reach an agreement on that the second information is the working information of the third node device.

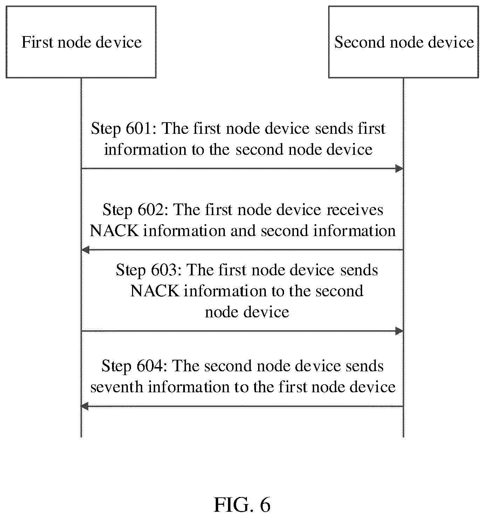

Interaction manner 5: As shown in FIG. 6, an information transmission method according to an embodiment of the present invention includes:
Step 601: The first node device sends first information to the second node device;
Step 602: The first node device receives NACK information and second information;
Step 603: The first node device sends NACK information to the second node device; and
Step 604: The second node device sends seventh information to the first node device.

Here, after the second node device sends the seventh information to the first node device, the first node device sends feedback information for the seventh information to the second node device, that is, the first node device and the second node device continue to coordinate until the first node device and the second node device reach an agreement on consistent working information, and the agreed consistent working information of the third node device is sent to the third node device.

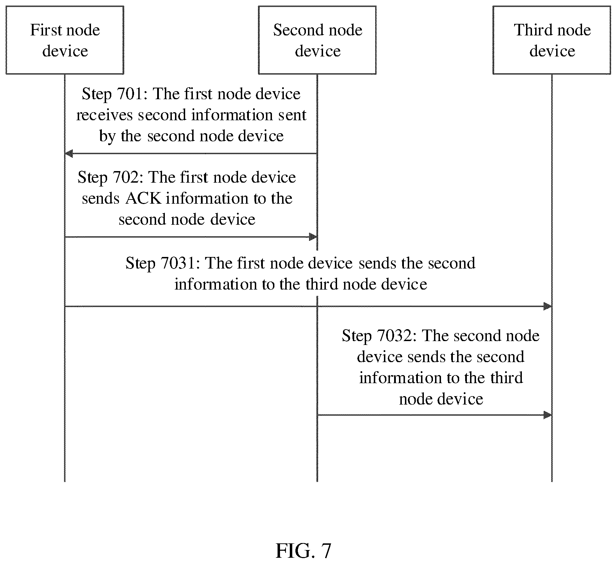

Interaction manner 6: As shown in FIG. 7, an information transmission method according to an embodiment of the present invention includes:
Step 701: The first node device receives second information sent by the second node device;
Step 702: The first node device sends ACK information to the second node device; and
Step 7031: The first node device sends the second information to the third node device; or
Step 7032: The second node device sends the second information to the third node device.

In this interaction manner, after coordination, the first node device and the second node device determine the second information as the working information of the third node device, and the first node device and/or the second node device sends the second information to the third node device.

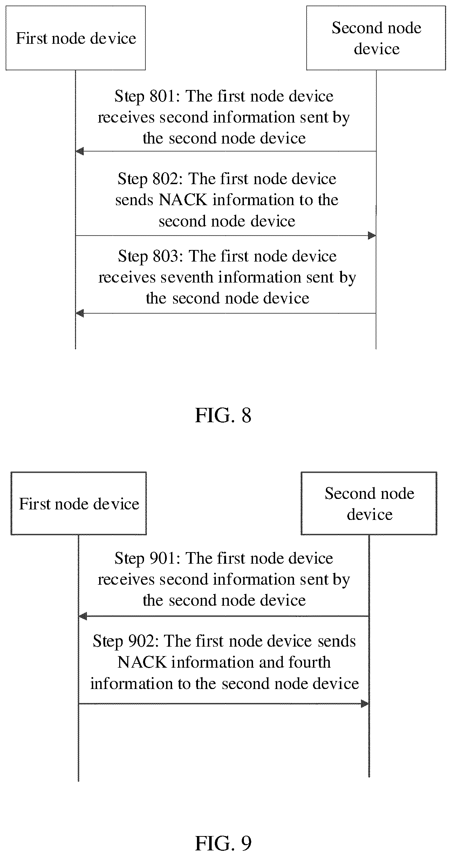

Interaction manner 7: As shown in FIG. 8, an information transmission method according to an embodiment of the present invention includes:
Step 801: The first node device receives second information sent by the second node device;
Step 802: The first node device sends NACK information to the second node device; and
Step 803: The first node device receives seventh information sent by the second node device.

Here, after the second node device sends the seventh information, the first node device and the second node device continue to coordinate until the first node device and the second node device reach an agreement on consistent working information, that is, a node device sends ACK information, and the agreed consistent working information of the third node device is sent to the third node device.

Interaction manner 8: As shown in FIG. 9, an information transmission method according to an embodiment of the present invention includes:
Step 901: The first node device receives second information sent by the second node device; and
Step 902: The first node device sends NACK information and fourth information to the second node device.

Here, after the first node device sends the NACK information and the fourth information, the first node device and the second node device continue to coordinate until the first node device and the second node device reach an agreement on consistent working information, that is, a node device sends ACK information, and the agreed consistent working information of the third node device is sent to the third node device.

In the information transmission method in this embodiment of the present invention, after coordinating the target information, the first node device and the second node device determine the working information of the third node device, so that the third node device works according to uniform working information, which resolves the problem that the intelligent surface cannot simultaneously execute different working commands for the intelligent surface from two nodes.

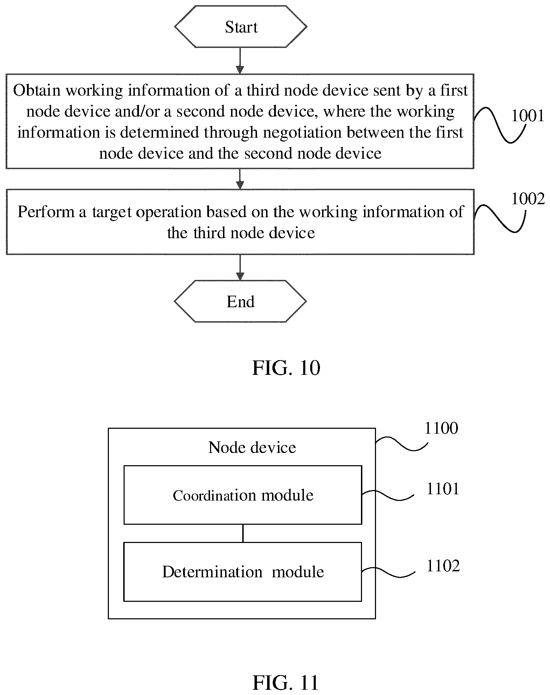

As shown in FIG. 10, an embodiment of the present invention further provides an information transmission method, applied to a third node device, and the method includes the following steps.

Step 1001: Obtain working information of a third node device sent by a first node device and/or a second node device, where the working information is determined through coordination between the first node device and the second node device.

The working information includes identification information of the third node device.

The working information further includes at least one of the following:
on/off information of switch elements of reflecting or refracting units in the third node device;
a working mode of the third node device;
phase related information;
amplitude related information;
polarization related information; and
frequency related information.

The working mode includes at least one of the following:
covering one direction at one moment; and
covering two directions at one moment.

The covering one direction at one moment may refer to shape a main direction at one moment. The covering two directions at one moment may refer to shape two main directions at one moment.

Specifically, the covering two directions at one moment refers to shape two directions by the third node device at one moment, or means that one part of the third node device works in a mode of direction 1 and another part of the third node device works in a mode of direction 2 at the same time.

For example, if the third node device is an intelligent surface, an intelligent surface unit shapes two directions at one moment, or one part of the intelligent surface unit works in a mode of direction 1 and simultaneously another part of the surface unit works in a mode of direction 2.

Step 1002: Perform a target operation based on the working information of the third node device.

Optionally, in a case that the working information of the third node device sent by the first node device is different from the working information of the third node device sent by the second node device, an operation corresponding to the working information of the third node device sent by the first node device is performed; or
in a case that the working information of the third node device sent by the first node device is different from the working information of the third node device sent by the second node device, an operation corresponding to the working information of the third node device sent by the second node device is performed; or
in a case that the working information of the third node device sent by the first node device is different from the working information of the third node device sent by the second node device, neither an operation corresponding to the working information of the third node device sent by the first node device nor an operation corresponding to the working information of the third node device sent by the second node device is performed.

In this embodiment of the present invention, in a case that the working information of the third node device sent by the first node device is different from the working information of the third node device sent by the second node device, the working information sent by the first node device is performed, or the working information sent by the second node device is performed, or the working information sent by the first node device or the working information sent by the second node device is arbitrarily selected, or neither is performed.

Optionally, the working information of the third node device is determined after the first node device and the second node device coordinate target information.

The target information includes at least one of first information, second information, feedback information for the first information, and feedback information for the second information.

The first information is working information of the third node device expected by the first node device.

The second information is working information of the third node device expected by the second node device.

In the information transmission method in this embodiment of the present invention, the working information of the third node device sent by the first node device and/or the second node device is obtained, and the target operation is performed according to the working information of the third node device, which resolves the problem that the intelligent surface cannot simultaneously execute different working commands for the intelligent surface from two nodes.

As shown in FIG. 11, an embodiment of the present invention further provides a node device 1100, where the node device is a first node device, and the first node device may specifically be a base station, and the node device 1100 includes:
a coordination module 1101, configured to coordinate target information with a second node device; and
a determination module 1102, configured to determine, based on the target information, working information of a third node device.

The target information includes at least one of first information, second information, feedback information for the first information, and feedback information for the second information.

The first information is working information of the third node device expected by the first node device.

The second information is working information of the third node device expected by the second node device.

The determined working information of the third node device includes identification information of the third node device.

The determined working information of the third node device further includes at least one of the following:
on/off information of switch elements of reflecting or refracting units in the third node device;
a working mode of the third node device;
phase related information;
amplitude related information;
polarization related information; and
frequency related information.

The node device in this embodiment of the present invention further includes:
a sending module, configured to send the determined working information of the third node device to the third node device after the determination module determines the working information of the third node device.

In the node device in this embodiment of the present invention, the working information is periodic working information or the working information is aperiodic working information.

In the node device in this embodiment of the present invention, when the working information is aperiodic working information, the working information further includes at least one of the following:
time information corresponding to the identification information;
time information corresponding to the on/off information;
time information corresponding to the phase related information;
time information corresponding to the amplitude related information; and
time information corresponding to the polarization related information.

In the node device in this embodiment of the present invention, when the working information is periodic working information, the working information further includes N groups of bits; N is a quantity of time units included within one cycle of the working information, and the N groups of bits are in one-to-one correspondence with the N time units; where
each group of bits is used to indicate at least one of the following information in a corresponding time unit:
a working mode;
on/off information of switch elements;
phase related information;
amplitude related information; and
polarization related information; and
N is an integer greater than or equal to 1, and a quantity of bits included in each group of bits is determined based on a quantity of pieces of the on/off information.

In the node device in this embodiment of the present invention, the working mode includes a first working mode on at least one downlink time resource and a second working mode on an uplink time resource corresponding to the at least one downlink time resource; where
the second working mode is one of the first working mode.

In the node device in this embodiment of the present invention, the coordination module includes:
a first sending submodule, configured to send the first information to the second node device; and
a first receiving submodule, configured to receive third information sent by the second node device, where the third information includes at least one of the second information and the feedback information for the first information.

In the node device in this embodiment of the present invention, the determination module is configured to: in a case that the third information includes the feedback information for the first information and that the feedback information for the first information is ACK information, determine that the working information of the third node device is the first information.

In the node device in this embodiment of the present invention, the coordination module further includes:
a second sending submodule, configured to: in a case that the third information includes only the feedback information for the first information and that the feedback information for the first information is NACK information, send fourth information to the second node device after the first receiving submodule receives the third information sent by the second node device; and
a second receiving submodule, configured to receive feedback information for the fourth information sent by the second node device; where
the fourth information is working information of the third node device expected by the first node device, and the fourth information is different from the first information.

In the node device in this embodiment of the present invention, the determination module is configured to: in a case that the feedback information for the fourth information is ACK information, determine that the working information of the third node device is the fourth information.

In the node device in this embodiment of the present invention, the coordination module further includes:
a third sending submodule, configured to: in a case that the third information includes the second information and the feedback information for the first information and that the feedback information for the first information is NACK information, or in a case that the third information includes only the second information, send the feedback information for the second information to the second node device after the first receiving submodule receives the third information sent by the second node device.

In the node device in this embodiment of the present invention, the determination module is configured to: in a case that the feedback information for the second information is an ACK, determine that the working information of the third node device is the second information.

In the node device in this embodiment of the present invention, the coordination module further includes:
a third receiving submodule, configured to receive the second information sent by the second node device; and
a fourth sending submodule, configured to send fifth information to the second node device, the fifth information including at least one of fourth information and the feedback information for the second information; where
the fourth information is working information of the third node device expected by the first node device, and the fourth information is different from the first information.

In the node device in this embodiment of the present invention, the coordination module further includes:
a fourth receiving submodule, configured to: in a case that the fifth information includes only the feedback information for the second information and that the feedback information for the second information is a NACK, or in a case that the fifth information includes only the fourth information, or in a case that the fifth information includes the fourth information and the feedback information for the second information and that the feedback information for the second information is NACK information, receive sixth information sent by the second node device after the fourth sending submodule sends the fifth information to the second node device, the sixth information including at least one of seventh information and feedback information for the fourth information; where
the seventh information is working information of the third node device expected by the second node device, and the seventh information is different from the second information.

In the node device in this embodiment of the present invention, the second node device is a node device belonging to a same operator as the first node device, or the second node device is a node device belonging to a different operator than the first node device; and
the third node device is a node device associated with the first node device and the second node device.

In the node device in this embodiment of the present invention, the second node device has a same site address and a same antenna direction as the first node device; or
the second node device has a different site address from the first node device; or
the second node device has a different antenna direction from the first node device.

After coordinating the target information with the second node device, the node device in this embodiment of the present invention determines the working information of the third node device, so that the third node device works according to the determined working information, which resolves the problem that the intelligent surface cannot simultaneously execute different working commands for the intelligent surface from two nodes.

It should be noted that this node device embodiment is a node device corresponding to the foregoing information transmission method applied to the first node device. All implementations in the foregoing embodiments are applicable to this node device embodiment, with the same technical effects achieved.

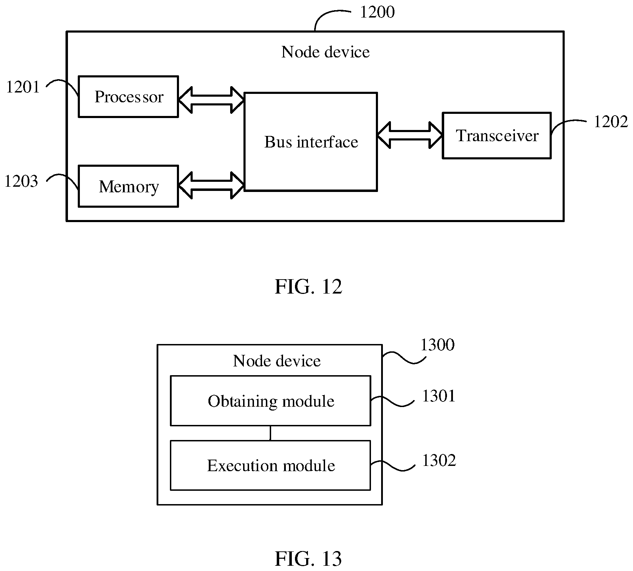

FIG. 12 is a structural diagram of a node device according to an embodiment of the present invention. The node device is capable of implementing details of the foregoing information transmission method, with the same effects achieved. As shown in FIG. 12, a node device 1200 includes a processor 1201, a transceiver 1202, a memory 1203, and a bus interface, where the processor 1201 is configured to: coordinate target information with a second node device through the transceiver 1202; and determine, based on the target information, working information of a third node device.

The target information includes at least one of first information, second information, feedback information for the first information, and feedback information for the second information.

The first information is working information of the third node device expected by the first node device.

The second information is working information of the third node device expected by the second node device.

The determined working information of the third node device includes identification information of the third node device.

The determined working information of the third node device further includes at least one of the following:
on/off information of switch elements of reflecting or refracting units in the third node device;
a working mode of the third node device;
phase related information;
amplitude related information;
polarization related information; and
frequency related information.

In FIG. 12, a bus architecture may include any quantity of interconnected buses and bridges, and specifically links various circuits of one or more processors specifically represented by the processor 1201 and a memory represented by the memory 1203. The bus architecture may further interconnect various other circuits such as a peripheral device, a voltage regulator, and a power management circuit. These are all well known in the art, and therefore are not further described in this specification. The bus interface provides interfaces. The transceiver 1202 may be a plurality of components, including a transmitter and a receiver, and provides units for communicating with various other apparatuses on a transmission medium.

In FIG. 12, a bus architecture may include any quantity of interconnected buses and bridges, and specifically links various circuits of one or more processors specifically represented by the processor 1201 and a memory represented by the memory 1203. The bus architecture may further interconnect various other circuits such as a peripheral device, a voltage regulator, and a power management circuit. These are all well known in the art, and therefore are not further described in this specification. The bus interface provides interfaces. The transceiver 1202 may be a plurality of components, including a transmitter and a receiver, and provides units for communicating with various other apparatuses on a transmission medium.

The node device in this embodiment of the present invention is capable of implementing the processes of the embodiments of the information transmission method applied to the first node device, with the same technical effects achieved. To avoid repetition, details are not described herein again.

Preferably, an embodiment of the present invention further provides a node device, including a processor, a memory, and a program stored in the memory and capable of running on the processor. When the program is executed by the processor, the processes of the embodiments of the information transmission method applied to the first node device are implemented, with the same technical effects achieved. To avoid repetition, details are not described herein again.

An embodiment of the present invention further provides a readable storage medium, where the readable storage medium stores a program, and when the program is executed by a processor, the processes of the embodiments of the information transmission method applied to the first node device are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

As shown in FIG. 13, an embodiment of the present invention further provides a node device 1300, where the node device is the foregoing third node device and includes:
an obtaining module 1301, configured to obtain working information of the third node device sent by a first node device and/or a second node device, where the working information is determined through coordination between the first node device and the second node device; and
an execution module 1302, configured to perform a target operation based on the working information of the third node device; where
the working information includes identification information of the third node device.

The working information further includes at least one of the following:
on/off information of switch elements of reflecting or refracting units in the third node device;
a working mode of the third node device;
phase related information;
amplitude related information;
polarization related information; and
frequency related information.

In the node device in this embodiment of the present invention, the working information of the third node device is determined after the first node device and the second node device coordinate target information.

The target information includes at least one of first information, second information, feedback information for the first information, and feedback information for the second information.

The first information is working information of the third node device expected by the first node device.

The second information is working information of the third node device expected by the second node device.

In the node device in this embodiment of the present invention, the execution module is configured to: in a case that the working information of the third node device sent by the first node device is different from the working information of the third node device sent by the second node device, perform an operation corresponding to the working information of the third node device sent by the first node device; or
in a case that the working information of the third node device sent by the first node device is different from the working information of the third node device sent by the second node device, perform an operation corresponding to the working information of the third node device sent by the second node device; or
in a case that the working information of the third node device sent by the first node device is different from the working information of the third node device sent by the second node device, skip performing an operation corresponding to the working information of the third node device sent by the first node device and skip performing an operation corresponding to the working information of the third node device sent by the second node device.

In the node device in this embodiment of the present invention, the working mode includes at least one of the following:
covering one direction at one moment; and
covering two directions at one moment.

In the node device in this embodiment of the present invention, the working information of the third node device sent by the first node device and/or the second node device is obtained, and the target operation is performed according to the working information of the third node device, which resolves the problem that the intelligent surface cannot simultaneously execute different working commands for the intelligent surface from two nodes.

It should be noted that this node device embodiment is a node device corresponding to the foregoing information transmission method applied to the third node device. All implementations in the foregoing embodiments are applicable to this node device embodiment, with the same technical effects achieved.

Preferably, an embodiment of the present invention further provides a node device, including a processor, a memory, and a program stored in the memory and capable of running on the processor. When the program is executed by the processor, the processes of the embodiments of the information transmission method applied to the third node device are implemented, with the same technical effects achieved. To avoid repetition, details are not described herein again.

An embodiment of the present invention further provides a readable storage medium, where the readable storage medium stores a program, and when the program is executed by a processor, the processes of the embodiments of the information transmission method applied to the third node device are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of the present invention further provides a chip, where the chip includes a processor and a communications interface, the communications interface is coupled to the processor, and the processor is configured to run a program or instructions to implement the processes of the foregoing embodiments of the information transmission method, with the same technical effects achieved. To avoid repetition, details are not described herein again.

It should be understood that the chip mentioned in this embodiment of this application may also be referred to as a system-on-chip, a system chip, a chip system, or the like.

The network device may be a base transceiver station (Base Transceiver Station, BTS) in global system for mobile communications (Global System of Mobile communications, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolved Node B, eNB or eNodeB), a relay station, or an access point in LTE, or may be a base station in a future 5G network, or the like, which is not limited herein.

A person of ordinary skill in the art may realize that units and algorithm steps of various examples described with reference to the embodiments disclosed in this specification can be implemented by using electronic hardware or a combination of a computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in the embodiments of this disclosure may be integrated into one processing unit, or each of the units may exist alone physically, or two or more units are integrated into one unit.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

A person of ordinary skill in the art may understand that all or some of the processes of the methods in the embodiments may be implemented by a computer program controlling relevant hardware. The program may be stored in a computer-readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

It can be understood that the embodiments described in the embodiments of this disclosure may be implemented by hardware, software, firmware, middleware, microcode, or a combination thereof. For hardware implementation, modules, units, and subunits may be implemented in one or more application-specific integrated circuits (Application Specific Integrated Circuits, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the technologies described in the embodiments of this disclosure may be implemented by modules (for example, procedures or functions) that perform the functions described in the embodiments of this disclosure. Software code may be stored in the memory and executed by the processor. The memory may be implemented in the processor or external to the processor.

The foregoing descriptions are merely preferred implementations of the present invention. It should be noted that those of ordinary skill in the art may further make some improvements and refinements without departing from the principle of the present invention, and these improvements and refinements also fall within the scope of protection of the present invention.

## Claims

1. An information transmission method, applied to a first node device and comprising:
coordinating target information with a second node device; and
determining, based on the target information, working information of a third node device; wherein
the target information comprises at least one of first information, second information, feedback information for the first information, and feedback information for the second information;
the first information is working information of the third node device expected by the first node device;
the second information is working information of the third node device expected by the second node device;
the determined working information of the third node device comprises identification information of the third node device; and
the determined working information of the third node device further comprises at least one of the following:
on/off information of switch elements of reflecting or refracting units in the third node device;
a working mode of the third node device;
phase related information;
amplitude related information;
polarization related information; and
frequency related information.

2. The information transmission method according to claim 1, wherein after the determining working information of a third node device, the method further comprises:
sending the determined working information of the third node device to the third node device.

3. The information transmission method according to claim 1, wherein the working information is periodic working information or the working information is aperiodic working information.

4. The information transmission method according to claim 3, wherein when the working information is aperiodic working information, the working information further comprises at least one of the following:
time information corresponding to the identification information;
time information corresponding to the on/off information;
time information corresponding to the phase related information;
time information corresponding to the amplitude related information; and
time information corresponding to the polarization related information.

5. The information transmission method according to claim 3, wherein when the working information is periodic working information, the working information further comprises N groups of bits; N is a quantity of time units comprised within one cycle of the working information, and the N groups of bits are in one-to-one correspondence with the N time units; wherein
each group of bits is used to indicate at least one of the following information in a corresponding time unit:
a working mode;
on/off information of switch elements;
phase related information;
amplitude related information; and
polarization related information; and
N is an integer greater than or equal to 1, and a quantity of bits comprised in each group of bits is determined based on a quantity of pieces of the on/off information.

6. The information transmission method according to claim 5, wherein the working mode comprises a first working mode on at least one downlink time resource and a second working mode on an uplink time resource corresponding to the at least one downlink time resource; wherein
the second working mode is one of the first working mode.

7. The information transmission method according to claim 1, wherein the coordinating target information with a second node device comprises:
sending the first information to the second node device; and
receiving third information sent by the second node device, wherein the third information comprises at least one of the second information and the feedback information for the first information.

8. The information transmission method according to claim 7, wherein the determining, based on the target information, working information of a third node device comprises:
in a case that the third information comprises the feedback information for the first information and that the feedback information for the first information is ACK information, determining that the working information of the third node device is the first information.

9. The information transmission method according to claim 7, wherein in a case that the third information comprises only the feedback information for the first information and that the feedback information for the first information is negative acknowledgement NACK information,
after the receiving third information sent by the second node device, the method further comprises:
sending fourth information to the second node device; and
receiving feedback information for the fourth information sent by the second node device; wherein
the fourth information is working information of the third node device expected by the first node device, and the fourth information is different from the first information.

10. The information transmission method according to claim 9, wherein the determining, based on the target information, working information of a third node device comprises:
in a case that the feedback information for the fourth information is positive acknowledgement ACK information, determining that the working information of the third node device is the fourth information.

11. The information transmission method according to claim 7, wherein in a case that the third information comprises the second information and the feedback information for the first information and that the feedback information for the first information is NACK information, or in a case that the third information comprises only the second information,
after the receiving third information sent by the second node device, the method further comprises:
sending the feedback information for the second information to the second node device.

12. The information transmission method according to claim 11, wherein the determining, based on the target information, working information of a third node device comprises:
in a case that the feedback information for the second information is an ACK, determining that the working information of the third node device is the second information.

13. The information transmission method according to claim 1, wherein the coordinating target information with a second node device comprises:
receiving the second information sent by the second node device; and
sending fifth information to the second node device, the fifth information comprising at least one of fourth information and the feedback information for the second information; wherein
the fourth information is working information of the third node device expected by the first node device, and the fourth information is different from the first information.

14. The information transmission method according to claim 13, wherein in a case that the fifth information comprises only the feedback information for the second information and that the feedback information for the second information is a NACK, or in a case that the fifth information comprises only the fourth information, or in a case that the fifth information comprises the fourth information and the feedback information for the second information and that the feedback information for the second information is NACK information,
after the sending fifth information to the second node device, the method further comprises:
receiving sixth information sent by the second node device, the sixth information comprising at least one of seventh information and feedback information for the fourth information; wherein
the seventh information is working information of the third node device expected by the second node device, and the seventh information is different from the second information.

15. The information transmission method according to claim 1, wherein the second node device is a node device belonging to a same operator as the first node device, or the second node device is a node device belonging to a different operator than the first node device; and
the third node device is a node device associated with the first node device and the second node device.

16. The information transmission method according to claim 15, wherein the second node device has a same site address and a same antenna direction as the first node device; or
the second node device has a different site address from the first node device; or
the second node device has a different antenna direction from the first node device.

17. An information transmission method, applied to a third node device and comprising:
obtaining working information of the third node device sent by a first node device and/or a second node device, wherein the working information is determined through coordination between the first node device and the second node device; and
performing a target operation based on the working information of the third node device; wherein
the working information comprises identification information of the third node device; and
the working information further comprises at least one of the following:
on/off information of switch elements of reflecting or refracting units in the third node device;
a working mode of the third node device;
phase related information;
amplitude related information;
polarization related information; and
frequency related information.

18. The information transmission method according to claim 17, wherein the working information of the third node device is determined after the first node device and the second node device coordinate target information; wherein
the target information comprises at least one of first information, second information, feedback information for the first information, and feedback information for the second information;
the first information is working information of the third node device expected by the first node device; and
the second information is working information of the third node device expected by the second node device.

19. The information transmission method according to claim 17, wherein the performing a target operation based on the working information of the third node device comprises:
in a case that the working information of the third node device sent by the first node device is different from the working information of the third node device sent by the second node device, performing an operation corresponding to the working information of the third node device sent by the first node device; or
in a case that the working information of the third node device sent by the first node device is different from the working information of the third node device sent by the second node device, performing an operation corresponding to the working information of the third node device sent by the second node device; or
in a case that the working information of the third node device sent by the first node device is different from the working information of the third node device sent by the second node device, skipping performing an operation corresponding to the working information of the third node device sent by the first node device and skipping performing an operation corresponding to the working information of the third node device sent by the second node device.

20. A node device, wherein the node device is a first node device and comprises:
a coordination module, configured to coordinate target information with a second node device; and
a determination module, configured to determine, based on the target information, working information of a third node device; wherein
the target information comprises at least one of first information, second information, feedback information for the first information, and feedback information for the second information;
the first information is working information of the third node device expected by the first node device;
the second information is working information of the third node device expected by the second node device;
the determined working information of the third node device comprises identification information of the third node device; and
the determined working information of the third node device further comprises at least one of the following:
on/off information of switch elements of reflecting or refracting units in the third node device;
a working mode of the third node device;
phase related information;
amplitude related information;
polarization related information; and
frequency related information.

21. The node device according to claim 20, further comprising:
a sending module, configured to send the determined working information of the third node device to the third node device after the determination module determines the working information of the third node device.

22. The node device according to claim 20, wherein the working information is periodic working information or the working information is aperiodic working information.

23. The node device according to claim 22, wherein when the working information is aperiodic working information, the working information further comprises at least one of the following:
time information corresponding to the identification information;
time information corresponding to the on/off information;
time information corresponding to the phase related information;
time information corresponding to the amplitude related information; and
time information corresponding to the polarization related information.

24. The node device according to claim 22, wherein when the working information is periodic working information, the working information further comprises N groups of bits; N is a quantity of time units comprised within one cycle of the working information, and the N groups of bits are in one-to-one correspondence with the N time units; wherein
each group of bits is used to indicate at least one of the following information in a corresponding time unit:
a working mode;
on/off information of switch elements;
phase related information;
amplitude related information; and
polarization related information; and
N is an integer greater than or equal to 1, and a quantity of bits comprised in each group of bits is determined based on a quantity of pieces of the on/off information.

25. The node device according to claim 24, wherein the working mode comprises a first working mode on at least one downlink time resource and a second working mode on an uplink time resource corresponding to the at least one downlink time resource; wherein
the second working mode is one of the first working mode.

26. The node device according to claim 20, wherein the coordination module comprises:
a first sending submodule, configured to send the first information to the second node device; and
a first receiving submodule, configured to receive third information sent by the second node device, wherein the third information comprises at least one of the second information and the feedback information for the first information.

27. The node device according to claim 26, wherein the determination module is configured to: in a case that the third information comprises the feedback information for the first information and that the feedback information for the first information is ACK information, determine that the working information of the third node device is the first information.

28. The node device according to claim 26, wherein the coordination module further comprises:
a second sending submodule, configured to: in a case that the third information comprises only the feedback information for the first information and that the feedback information for the first information is NACK information, send fourth information to the second node device after the first receiving submodule receives the third information sent by the second node device; and
a second receiving submodule, configured to receive feedback information for the fourth information sent by the second node device; wherein
the fourth information is working information of the third node device expected by the first node device, and the fourth information is different from the first information.

29. The node device according to claim 28, wherein the determination module is configured to: in a case that the feedback information for the fourth information is ACK information, determine that the working information of the third node device is the fourth information.

30. The node device according to claim 26, wherein the coordination module further comprises:
a third sending submodule, configured to: in a case that the third information comprises the second information and the feedback information for the first information and that the feedback information for the first information is NACK information, or in a case that the third information comprises only the second information, send the feedback information for the second information to the second node device after the first receiving submodule receives the third information sent by the second node device.

31. The node device according to claim 30, wherein the determination module is configured to: in a case that the feedback information for the second information is an ACK, determine that the working information of the third node device is the second information.

32. The node device according to claim 30, wherein the coordination module further comprises:
a third receiving submodule, configured to receive the second information sent by the second node device; and
a fourth sending submodule, configured to send fifth information to the second node device, the fifth information comprising at least one of fourth information and the feedback information for the second information; wherein
the fourth information is working information of the third node device expected by the first node device, and the fourth information is different from the first information.

33. The node device according to claim 32, wherein the coordination module further comprises:
a fourth receiving submodule, configured to: in a case that the fifth information comprises only the feedback information for the second information and that the feedback information for the second information is a NACK, or in a case that the fifth information comprises only the fourth information, or in a case that the fifth information comprises the fourth information and the feedback information for the second information and that the feedback information for the second information is NACK information, receive sixth information sent by the second node device after the fourth sending submodule sends the fifth information to the second node device, the sixth information comprising at least one of seventh information and feedback information for the fourth information; wherein
the seventh information is working information of the third node device expected by the second node device, and the seventh information is different from the second information.

34. The node device according to claim 30, wherein the second node device is a node device belonging to a same operator as the first node device, or the second node device is a node device belonging to a different operator than the first node device; and
the third node device is a node device associated with the first node device and the second node device.

35. The node device according to claim 34, wherein the second node device has a same site address and a same antenna direction as the first node device; or
the second node device has a different site address from the first node device; or
the second node device has a different antenna direction from the first node device.

36. A node device, comprising a memory, a processor, and a program stored in the memory and capable of running on the processor, wherein when the program is executed by the processor, the steps of the information transmission method according to any one of claims 1 to 16 are implemented.

37. A node device, wherein the node device is a third node device and comprises:
an obtaining module, configured to obtain working information of the third node device sent by a first node device and/or a second node device, wherein the working information is determined through coordination between the first node device and the second node device; and
an execution module, configured to perform a target operation based on the working information of the third node device; wherein
the working information comprises identification information of the third node device; and
the working information further comprises at least one of the following:
on/off information of switch elements of reflecting or refracting units in the third node device;
a working mode of the third node device;
phase related information;
amplitude related information;
polarization related information; and
frequency related information.

38. The node device according to claim 37, wherein the working information of the third node device is determined after the first node device and the second node device coordinate target information; wherein
the target information comprises at least one of first information, second information, feedback information for the first information, and feedback information for the second information;
the first information is working information of the third node device expected by the first node device; and
the second information is working information of the third node device expected by the second node device.

39. The node device according to claim 37, wherein the execution module is configured to: in a case that the working information of the third node device sent by the first node device is different from the working information of the third node device sent by the second node device, perform an operation corresponding to the working information of the third node device sent by the first node device; or
in a case that the working information of the third node device sent by the first node device is different from the working information of the third node device sent by the second node device, perform an operation corresponding to the working information of the third node device sent by the second node device; or
in a case that the working information of the third node device sent by the first node device is different from the working information of the third node device sent by the second node device, skip performing an operation corresponding to the working information of the third node device sent by the first node device and skip performing an operation corresponding to the working information of the third node device sent by the second node device.

40. A node device, comprising a memory, a processor, and a program stored in the memory and capable of running on the processor, wherein when the program is executed by the processor, the steps of the information transmission method according to any one of claims 17 to 19 are implemented.

41. A readable storage medium, wherein the readable storage medium stores a program, and when the program is executed by a processor, the steps of the information transmission method according to any one of claims 1 to 16 or the steps of the information transmission method according to any one of claims 17 to 19 are implemented.

42. A chip, wherein the chip comprises a processor and a communications interface, the communications interface is coupled to the processor, and the processor is configured to run a program or instructions, to implement the steps of the information transmission method according to any one of claims 1 to 16, or the steps of the information transmission method according to any one of claims 17 to 19.
